Europäisches Patentamt

European Patent Office

Office européen des brevets

(11) Publication number: **0 298 943**
A2

## (12) EUROPEAN PATENT APPLICATION

(21) Application number: 88850242.4

(22) Date of filing: 06.07.88

(51) Int. Cl.⁴: **F 01 N 3/28**
B 01 J 35/04

(30) Priority: 06.07.87 SE 8702771

(43) Date of publication of application:
11.01.89 Bulletin 89/02

(84) Designated Contracting States:
BE DE ES FR GB IT NL SE

(71) Applicant: SVENSKA EMISSIONSTEKNIK AB
S-445 01 Surte (SE)

(72) Inventor: Nilsson, Sven
Smakullevägen 18
S-430 50 Kallered (SE)

(74) Representative: Ferkinghoff, Claes-Göran et al
ALFONS HEDBERGS PATENTBYRA AB
Aschebergsgatan 35
S-411 33 Göteborg (SE)

(54) A catalyst carrier.

(57) A catalyst carrier (3) comprising two superposed webs (6, 7) of material which are wound about a core sleeve. One (6) of the webs is provided with transverse ridges (8) forming channels (9) which extend axially through the carrier. The other web (7) is provided with ribs (10) which cooperate with indentations made in the ridges (8) in the first web (6), whereby the webs (6, 7) are mechanically locked to each other.

Fig.3

EP 0 298 943 A2

**Description**

## A Catalyst Carrier

The subject invention concerns a catalyst carrier comprising two superposed webs of material which are wound about a core sleeve, one of said webs having transverse ridges forming channels which extend axially through the carrier.

A catalyst carrier is the part of the catalytic converter on which the catalytically active material is supported. A feature which is common to all catalyst carriers is that they are in the form of a structure comprising a considerable number of channels which as a rule extend through and in the lengthwise direction of the structure. The walls of the channels are coated with a material which serves as a carrier to support the catalytically active elements. The carrier material is characterized by its very large specific surface, usually between 70 and 250 $m^2/g$. Owing to the nature of this carrier material the surface area of the carrier body is considerably enlarged. Finally, the catalytically active material is desposited on the carrier material. All catalytically active materials in use belong to the group of metals known as the "platina group metals". They are very expensive and although only about 3 g of active material is required for one conventional catalytic converter of the kind used in the exhaust system of motor vehicles this material is the most expensive component of the catalytic converter.

Prior-art catalyst carriers fall into two principally different categories, viz. those made from.a ceramic material and those made from metal. The type most commonly used in catalytic converters for motor vehicle exhaust systems is the ceramic material type (about 90-95%). However, catalyst carriers of ceramic type suffer from certain disadvantages, the most serious one of which is that the walls by necessity are relatively thick. Because the flow rate through a catalytic converter is the factor which has the predominant influence on the dimensions of the carrier, carriers of ceramic type by necessity become comparatively bulky, which in turn causes problems of a technical and structural nature. In addition, ceramic materials are poor thermal conductors and consequently catalytic converters having ceramic catalyst carriers require a relatively long time before they reach their working temperature. This is a considerable drawback, since catalytic converters must reach a sufficiently high temperature level before they can function.

It is likewise known to manufacture catalyst carriers by winding two webs of material, one smooth and one corrugated, in superposed relationship in such a manner that the webs form a roller having lengthwise extending channels therein. Usually, these webs of material consist of stainless sheet metal. However, this manufacturing method requires that the two webs of material are immobilized relative to one another in their superposed and wound position, e.g. by soldering or welding. Soldering has been found not to work satisfactorily in practice, since the high operating temperatures of the catalytic converter may cause the solder to melt.

When welding is used to interlock the webs of material laser welding has been found to be the only viable method. However, this is a very expensive and therefore not economically justifiable welding method to use.

In addition, all prior-art catalyst carriers referred to suffer from the disadvantage that the flow through the carriers is laminar with the result that a thin layer of the medium, known as a boundary layer forms alongside the channel walls. This boundary layer largely prevents the gases passing through the catalytic converter from contacting and reacting with the catalytically active material deposited on the channel walls, with resulting poor catalytic function.

The purpose of the subject invention is to provide a catalyst carrier which is made from metal, which is inexpensive to manufacture and which does not suffer from any of the drawbacks outlined in the aforegoing.

This purpose is achieved in a catalyst carrier of the kind defined in the introduction and which is characterized therein that the second web of material is formed with lengthwise ribs, and that the ridges of the first web are provided both at their tops and at their bottoms with indentations having the same pitch as the ribs, the ribs of the second web engaging in said indentations, whereby a mechanical bond is established, interlocking the two webs.

Further characteristics of the invention will become apparent from the dependent claims and from the following description, defining one preferred embodiment of the invention.

One very important advantage inherent in the catalyst carrier in accordance with the invention is that the ribs which extend transversely relative to the direction of through-flow path generate a turbulent flow in the channels. Because the protrusions and the indentations are positioned opposite each other, the channel cross-sectional area remains the same throughout. This is an important advantage because channel throttling, which is the conventional method of generating a turbulent flow, results in an unecessarily large pressure drop. Another advantage found in the catalyst carrier in accordance with the invention is that the configuration and the course of the turbulent flow may be controlled by choosing varying heights of and spacings between the ribs without this affecting the advantages gained by the manufacturing process.

One preferred embodiment of the invention will be described in closer detail in the following with reference to the accompanying drawings, wherein

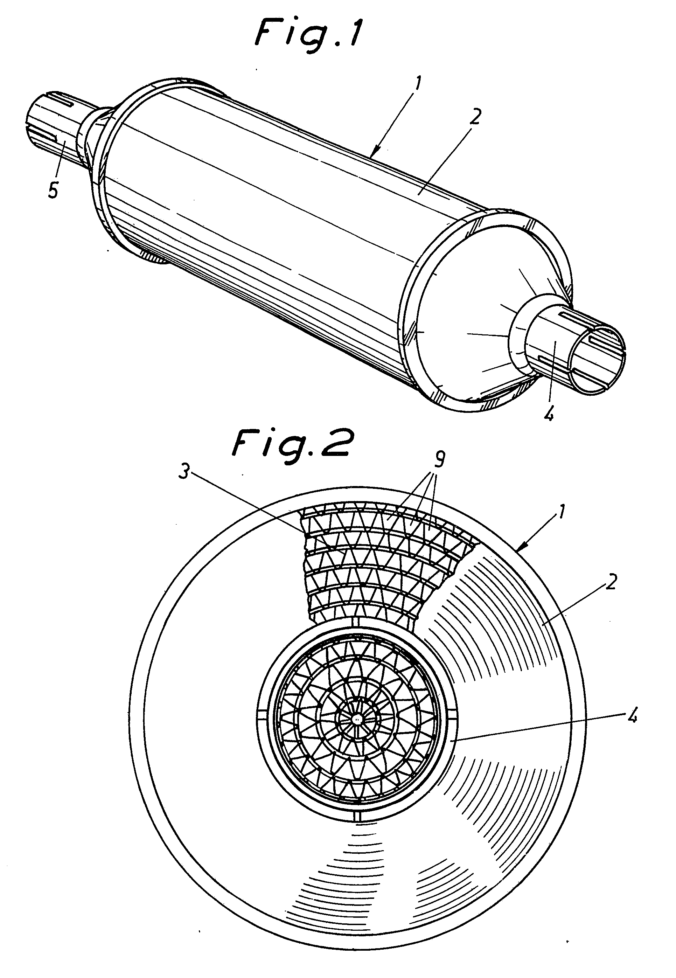

Fig. 1 is a perspective view of a catalytic converter intended for application in a motor vehicle exhaust system,

Fig. 2 is a partly broken front view of the catalytic converter in accordance with Fig. 1,

Fig. 3 is a perspective view of a part of the catalyst carrier, shown on an enlarged scale,

Fig. 4 is a broken view illustrating a conventional channel in a catalyst carrier, the gas flow being indicated by arrows,

Fig. 5 is a view similar to Fig. 4 but showing a channel in the catalyst carrier in accordance with the invention, and

Fig. 6 illustrates on a considerably enlarged scale a section through the wall of a channel having a layer of a porous carrier material deposited thereon.

The embodiment illustrated in the drawings concerns a catalytic converter 1 which is designed to purify the exhaust gases from a gasoline fuelled vehicle motor. The catalytic converter 1 consists of an elongate housing 2 in which is mounted a catalyst carrier 3 in accordance with the invention. The housing 2 is provided at its ends with fittings 4, 5, one of which is an inlet 4 and the other one an outlet 5.

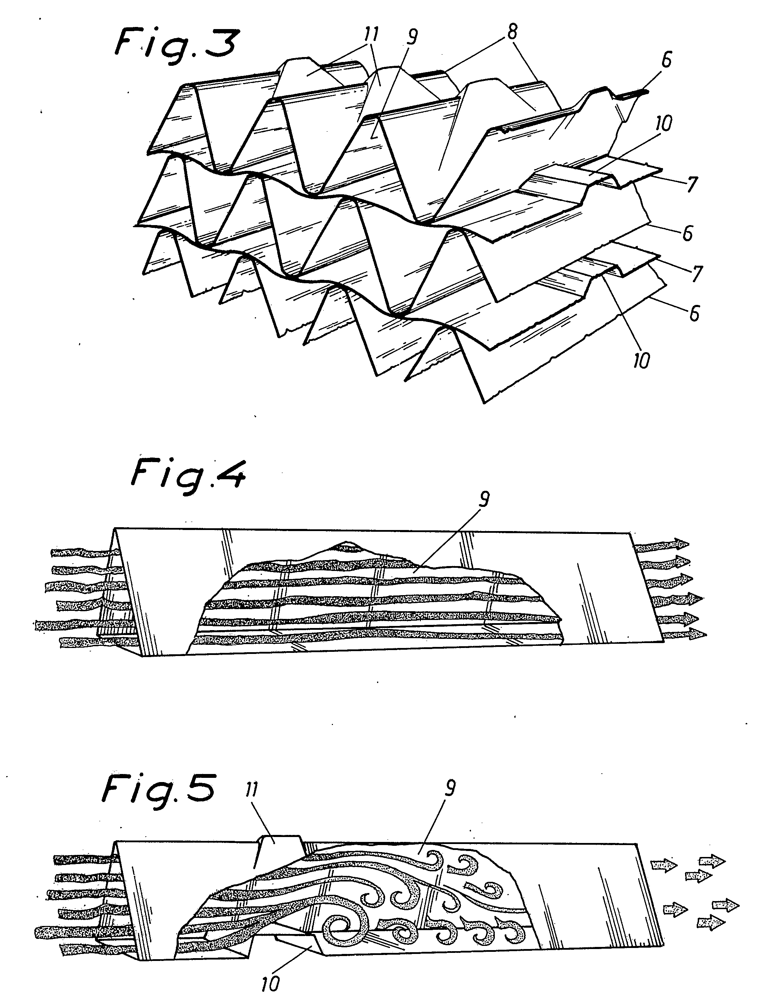

Fig. 3 illustrates the structure of the catalyst carrier 3 in accordance with the invention. For purposes of clarity, the normally curved shape of the carrier has been straightened. The carrier consists of two webs 6, 7 of material which are wound in superposed relationship. One, 6, of the webs is formed with transverse ridges 8 defining channels 9 which extend axially through the catalyst carrier 3, the latter being formed as a roller, whereas the other web, 7, is formed with lengthwise ribs 10. The ridges of the first web are provided at their tops as well as at their bottoms with indentations 11 having the same pitch as the ribs 10 formed in the second web 7 of material. When the two webs 6 and 7 of material are wound in superposed relationship the indentations 11 will engage in the ribs 10, thus establishing a mechanical bond which interlocks the two webs. Consequently, expensive welding operations to secure the structure of the catalyst carrier 3 in accordance with the invention are made redundant. The finished catalyst carrier 3 is submerged in baths containing respectively catalyst carrier material and catalytically active material and the carrier is then mounted in a housing 2.

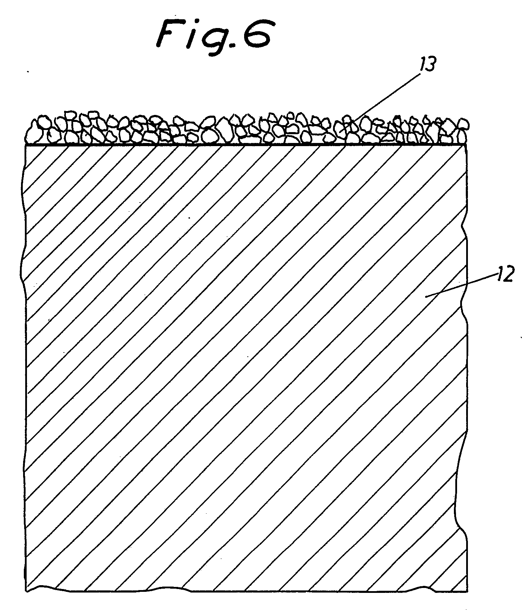

Another important advantage found in the catalyst carrier 3 in accordance with the invention appears from the drawing figures 4 and 5 which are broken perspective views of an individual channel 9 in a catalylst carrier, Fig. 4 shows a channel of conventional design and Fig. 5 a channel designed in accordance with the invention. In both drawing figures arrows indicate the path of the gases through the channels 9.

Inside the conventional channel shown in Fig. 4 the major part of the gases pass through the channel 9 in essentially straight flows paths without contacting the catalytically active material on the channel walls. The result is poor catalytic function. Inside the channel in accordance with Fig. 5, on the other hand, the ribs 10 create a turbulent flow which is generated without any noticeable area reduction of the channel 9 because the indentations 11 are positioned in alignment with and above the ribs 10. Owing to the turbulent flow no laminar boundary layer is formed which would come between the gas flow and the walls of the channel 9. The resulting increase of efficiency in turn means that a catalytic converter 1 incorporating a catalyst carrier 3 in accordance with the invention may be a great deal more compact than catalytic converters having catalyst carriers of conventional design. In addition to making it easier to mount catalytic converters in accordance with the invention in e.g. the exhaust system of motor vehicles, the most important advantage is the considerable savings in catalytically active material used by each catalytic converter that the design in accordance with the invention makes possible, which savings reduce the manufacturing costs considerably.

In order to further stress the importance of the turbulent flow provided by the catalyst carrier in accordance with the invention Fig. 6 illustrates schematically a channel wall 12 on which is deposited a porous carrier material 13 serving to support the catalytically active material thereon. (It should be noted that the the wall section and the carrier material are shown on a highly enlarged scale, the thickness of the carrier material layer actually being in the order of 5 to 15 $\mu$). Because of the porous structure of the carrier material consisting of deep pores it is highly advantageous if the gases flowing through the channel 9 could be made to deflect so as to impinge on the channel walls. Such impingement inducing deflection is achieved by the turbulent flow described in the aforegoing.

Finally, it should also be underlined that the invention is not limited to the embodiment described in the aforegoing and illustrated in the drawings but that a number of modifications are possible within the scope of the appended claims. For example, the invention is not limited for use in a catalytic converter for purification of the exhaust gases of cars, since the catalyst carrier in accordance with the invention is applicable with the same advantage to all kinds of catalytic converters which are intended for through-flow of gaseous media. Furthermore, it is likewise possible to manufacture the catalyst carrier 3 in accordance with the invention with a different shape than circular. For instance, for space economy reasons it may be advantageous to manufacture it in the shape of a "race track", in which case the core sleeve is replaced by a plate.

## Claims

1. A catalyst carrier (3) comprising two webs (6, 7) of material which are wound about a core sleeve in superposed relationship, one (6) of said webs having transverse ridges (8) forming channels (9) which extend axially through the carrier (3), **characterized** therein that the second web (7) of material is formed with lengthwise ribs (10), and that the ridges (8) of the first web (6) are provided both at their tops and at their bottoms with indentations (11) having the same pitch as the ribs (10), the ribs (10) of the second web (7) engaging in said indentations (11), whereby a mechanical bond is established, interlocking the two webs (6, 7).

2. A catalyst carrier as claimed in claim 1, **characterized** therein that it has a circular cross-sectional shape.

3. A catalyst carrier as claimed in claim 1, **characterized** therein that it has a cross-sectional shape in the form of a "race track".

4. A catalyst carrier as claimed in any one of the preceding claims, **characterized** therein that the webs (6, 7) of material consist of stainless steel.

0298943

Fig.1

Fig.2

*Fig.3*

*Fig.4*

*Fig.5*

# Fig.6